Europäisches Patentamt

European Patent Office

Office européen des brevets

(19)

(11) Numéro de publication: **0 226 488**
**B1**

(12) **FASCICULE DE BREVET EUROPEEN**

(45) Date de publication du fascicule du brevet:
08.03.89

(51) Int. Cl.⁴: **H01M 2/10**

(21) Numéro de dépôt: **86402475.7**

(22) Date de dépôt: **05.11.86**

(54) **Boîtier pour batteries sans entretien à liquide immobilisé pour l'alimentation des appareillages électroniques autonomes.**

(30) Priorité: **12.11.85 FR 8516645**

(43) Date de publication de la demande:
**24.06.87 Bulletin 87/26**

(45) Mention de la délivrance du brevet:
**08.03.89 Bulletin 89/10**

(84) Etats contractants désignés:
**AT BE CH DE ES GB IT LI NL SE**

(56) Documents cités:
**BE-A- 493 744**
**FR-A- 2 447 617**
**FR-A- 2 486 311**
**US-A- 3 956 021**

**PATENTS ABSTRACTS OF JAPAN,**
**vol. 8, no. 88 (E-240)[1525], 21 avril 1984; &**
**JP-A-59 8266 (MITSUBISHI DENKI K.K.) 17-01-1984**
**PATENTS ABSTRACTS OF JAPAN,**
**vol. 10, no. 79 (E-391)[2136], 28 mars 1986; &**
**JP-A-60 225 351 (HITACHI SEISAKUSHO**
**K.K.) 09-11-1985**
**ERICSSON REVIEW,**
**vol. 60, no. 4, 1983, pages 222-225, Stockholm, SE; H.**
**ANDERSSON et al.: "Sealed lead-acid batteries for**
**small telecommunication plants"**

(73) Titulaire: **Société Anonyme E.R.A.C., 41, Boulevard Tourasse, F-64000 Pau(FR)**

(72) Inventeur: **Bouvier, Georges, 41 bd Tourasse, F-64000 Pau(FR)**

(74) Mandataire: **Epstein, Henri, 7 Rue du Temple, F-95880 Enghien les Bains(FR)**

## Description

La présente invention concerne l'alimentation des appareillages électroniques autonomes au moyen de batteries sans entretien à liquide immobilisé et, plus particulièrement, des boîtiers adaptés à loger de telles batteries.

L'industrie électronique utilise fréquemment des batteries qui, compte tenu des endroits peu accessibles où se trouvent les installations électroniques par exemple pour les transmissions téléphoniques, télégraphiques ou autres, ne peuvent faire l'objet d'un entretien régulier. Par ailleurs, les conditions relatives à l'emplacement de telles installations exigent de pouvoir disposer des batteries fonctionnant dans n'importe quelle position, par exemple reposant sur une de ses faces latérales.

De telles batteries de voltage quelconque, souvent de 9,5 ou 12 volts, appelées batteries sans entretien à liquide immobilisé, sont conçues pour travailler dans de telles conditions.

Le logement de batteries servant à l'alimentation des installations électroniques placées dans les conditions précaires mentionnées ci-dessus présente des difficultés et il est apparu souhaitable de construire des boîtiers munis de connexions électriques branchées sur la batterie et sur l'alimentation des installations, de façon à obtenir, lorsqu'on glisse la batterie à l'intérieur du boîtier et on verrouille ce dernier, automatiquement et simultanément une jonction électrique fiable et un calage en position de la batterie. Un tel résultat doit être obtenu sans qu'il soit nécessaire de prendre des précautions, lors de la mise en place de la batterie, pour viser avec précision l'emplacement de cette dernière et pour effectuer séparément des branchements électriques.

La présente invention a pour l'objet de tels boîtiers permettant, lors d'une seule manœuvre consistant à glisser la batterie à l'intérieur du boîtier, à l'immobiliser et à assurer par là même toutes les connexions électriques nécessaires.

Le boîtier intégré pour batterie sans entretien à liquide immobilisé alimentant des appareillages électroniques autonomes selon l'invention comporte un boîtier muni de sortie de fils d'alimentation, de moyens de blocage vertical et horizontal en position de la batterie et de moyens de connexion électrique d'une part branchés sur l'arrivée du courant de la batterie, et d'autre part branchés sur l'appareillage électroniques à alimenter, l'intérieur du boîtier constituant un logement pour un support adapté à contenir la batterie, lequel support muni d'une poignée présente une face avant à laquelle est fixé un connecteur femelle pour la connexion de la batterie. Il est caractérisé en ce qu'à la paroi supérieure du boîtier est fixée à l'intérieur du boîtier une plaque verticale servant de support des deux pions de centrage et portant un connecteur mâle relié par un conducteur aux appareils électroniques à alimenter et dont les plots ressortant du côté extérieur de la plaque sont destinés à être coiffés par le connecteur femelle de la batterie et en ce que la face avant du support de batterie présente des perforations de guidage aux endroits correspondant à l'emplacement des pions de guidage de la plaque et porte le connecteur femelle coopérant avec le connecteur mâle correspondant du boîtier et relié aux bornes de la batterie.

Selon une forme avantageuse de réalisation, le boîtier est muni d'une porte articulée par des charnières et d'un verrou, ladite porte portant un butoir qui, lors de la fermeture de la porte, bloque la batterie en position horizontale.

La face arrière du boîtier porte à l'intérieur du boîtier une lame élastique horizontale servant au blocage de la batterie en position verticale.

D'autres particularités du boîtier selon l'invention apparaitront à la lumière de la description d'un mode de réalisation présenté à titre d'exemple non limitatif et illustré par des dessins, dont

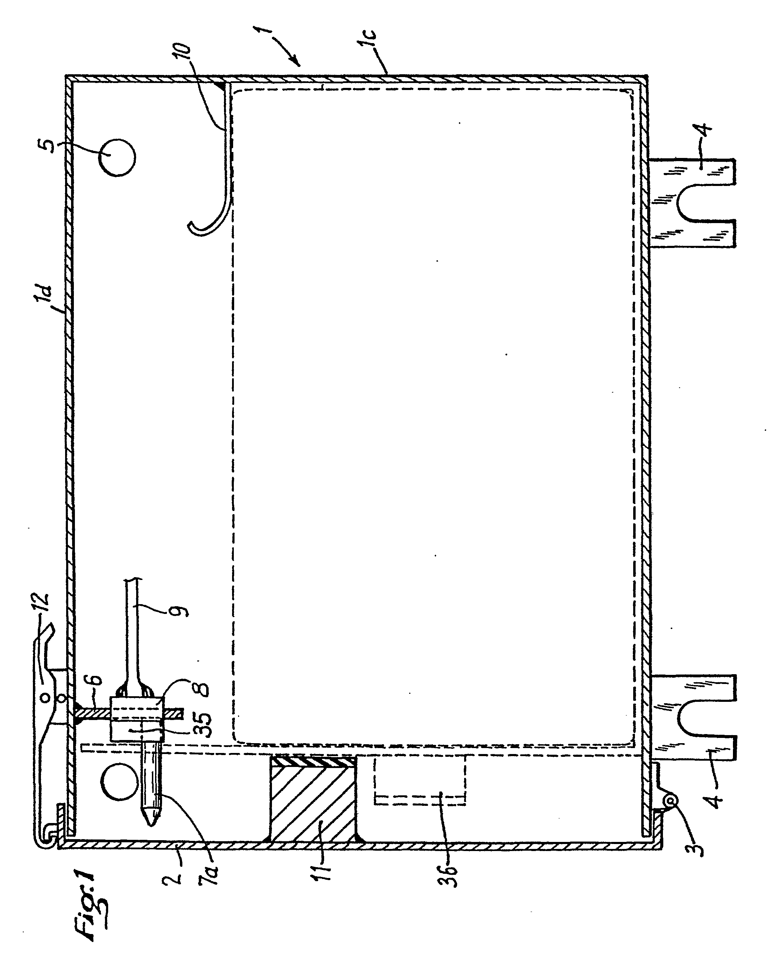

la figure 1 présente une vue en coupe longitudinale le boîtier fermé avec indication en pointillé de l'emplacement de la batterie et de son support logés à l'intérieur,

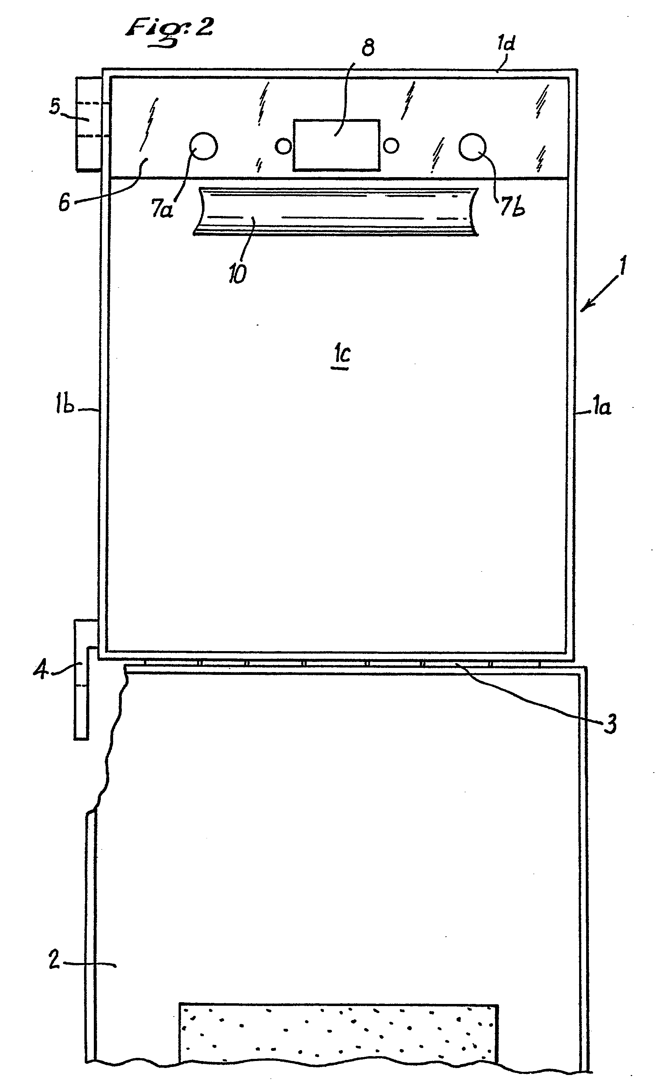

la figure 2 une vue de face du boîtier ouvert,

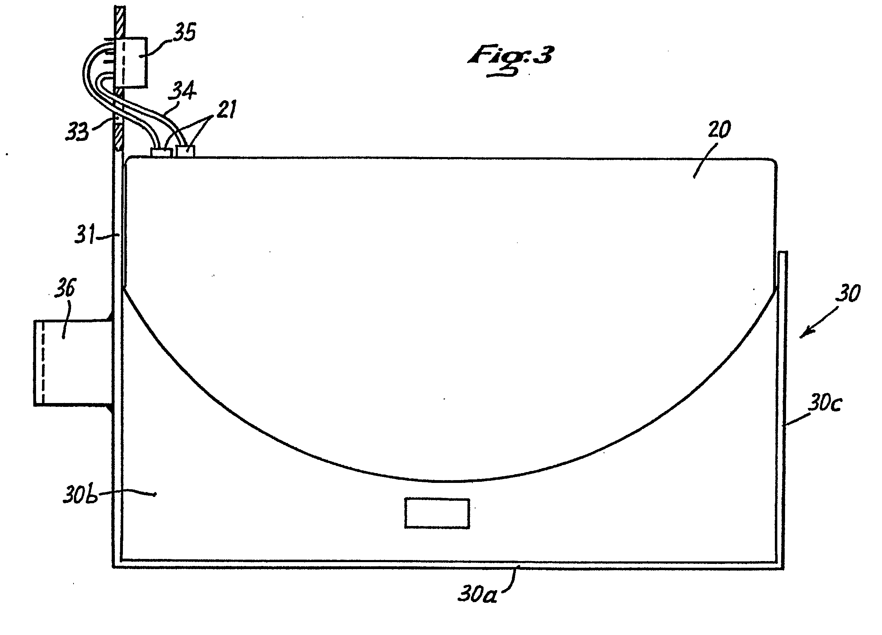

la figure 3 une vue de côté du support dans lequel est placée la batterie,

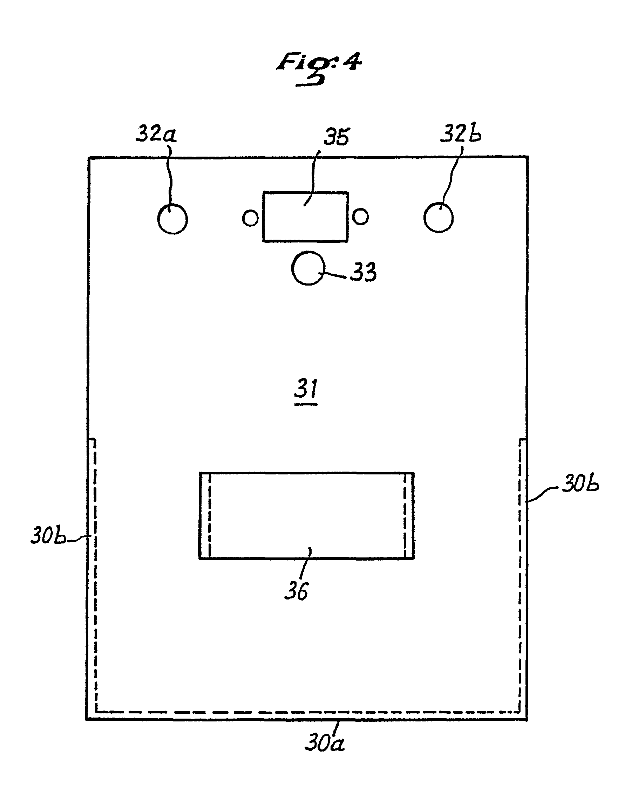

la figure 4 une vue de face du support.

Le boîtier 1 se présente sous forme d'une boîte dont les côtés latéraux sont désignés 1a et 1b, la paroi arrière 1c et la paroi supérieure 1d et pourvue d'une porte 2 articulée par des charnières 3. Le boîtier est pourvu de pieds 4 servant à le fixer au voisinage de l'installation à alimenter.

Un orifice 5 percé dans la paroi latérale 1b permet la sortie de fils vers l'appareillage à alimenter.

A la paroi supérieure 1d est fixée à l'intérieur du boîtier une plaque 6 servant de support aux deux pions de centrage 7a et 7b fixés perpendiculairement à la face extérieure de la plaque symétriquement par rapport à son centre.

La plaque 6 porte un connecteur mâle 8 dont les plots de contact ressortent sur la face extérieure de la plaque et sont destinés à être coiffés par le connecteur femelle 35 relié à la batterie.

Du côté de la face intérieure de la plaque 6, le connecteur 8 est branché, par exemple par soudure, sur l'alimentation des appareils électronique au moyen du conducteur 9 qui traverse le boîtier vers l'extérieur en passant par l'orifice 5.

A la paroi arrière 1c du boîtier est fixée une lame d'acier 10 dont l'extrémité est recourbée vers le haut, servant au calage vertical de la batterie.

La porte 2 du boîtier porte du côté intérieur un butoir 11 revêtu de caoutchouc et dimensionné de façon à immobiliser horizontalement le support de batterie, lorsque la porte est verrouillée au moyen d'une sauterelle de verrouillage 12.

La batterie 20 munie de bornes 21 est placée dans un support 30 comportant un fond 30a, deux côtés latéraux échancrés 30b, une face arrière 30c et une face avant 31 munie d'une poignée extérieure 36.

A sa partie supérieure, la face avant 31 est percée de perforations de guidage 32a et 32b aux endroits correspondant à l'emplacement de pions de guidage 7a et 7b portés par la plaque 6 du boîtier, ainsi que d'un orifice 33 servant à faire passer les fils 34 reliés aux bornes 21 de la batterie pour les brancher sur le connecteur femelle 35 fixé à la face intérieure de la face avant 31 à la hauteur correspondant à l'emplacement du connecteur mâle 8 sur la plaque du boîtier.

La mise en place de la batterie s'effectue de la façon suivante.

On fixe ou on pose le boîtier 1 auprès de l'installation à alimenter, de façon à ce que la porte 2 soit accessible de l'extérieur. On branche les conducteurs 9 sur le connecteur mâle 8 et on les fait passer à travers l'orifice 5 vers l'installation à alimenter.

On place la batterie à l'intérieur du support 30 et on connecte les fils 34 aux bornes 21 de la batterie et aux contacts du connecteur femelle 35 en les faisant passer de l'intérieur à l'extérieur du support.

On saisit la poignée 36 du support et on glisse le support à l'intérieur du boîtier en le poussant à fond, de façon à insérer la batterie sous la lame de blocage 10. A cet instant, le connecteur femelle 35 coiffe le connecteur mâle 8 de la plaque 6 solidaire du boîtier et le jonction électrique est réalisée entre la batterie et l'installation à alimenter au moyen de fils 9.

On referme la porte 2 en la verrouillant à l'aide de la sauterelle 12 de façon à ce que le butoir 11 maintienne avec serrage le support 30 contre la paroi arrière 1c du boîtier.

Comme on comprend aisément, les avantages du système proposé sont principalement de deux sortes. D'une part, l'insertion du support avec la batterie au fond du boîtier réalise une parfaite connexion électrique et d'autre part, l'agencement intérieur du boîtier permet d'assurer l'immobilisation de la batterie à l'intérieur du boîtier à la suite de cette simple manoeuvre, de façon à permettre le placement de la batterie par exemple en position latérale ou la tête en bas.

## Revendications

1. Boîtier intégré pour batterie sans entretien à liquide immobilisé alimentant des appareillages électroniques autonomes et le support de batterie, dans lequel le boîtier est muni de sortie de conducteurs d'alimentation, de moyens de blocage vertical et horizontal de la batterie et de moyens de connexion électrique, d'une part branchés sur l'arrivée du courant de la batterie et, d'autre part, branchés sur l'appareillage électronique à alimenter, l'intérieur du boîtier constituant un logement pour le support (30) adapté à contenir la batterie (20), lequel support muni d'une poignée (36) présente une face avant (31) à laquelle est fixé un connecteur femelle (35) pour la connexion de la batterie, caractérisé en ce qu'à la paroi supérieure (1d) du boîtier (1) est fixée à l'intérieur du boîtier une plaque verticale (6) servant de support des deux pions de centrage (7a,7b) et portant un connecteur mâle (8) relié par un conducteur (9) aux appareils électroniques à alimenter et dont les plots ressortant du côté extérieur de la plaque sont destinés à être coiffés par le connecteur femelle (35) de la batterie et en ce que la face avant (31) du support de batterie présente des perforations de guidage (32a, 32b) aux endroits correspondant à l'emplacement des pions de guidage (7a, 7b) de la plaque (6) du boîtier et porte le connecteur femelle (35) coopérant avec le connecteur mâle (8) correspondant du boîtier et relié aux bornes (21) de la batterie (20).

2. Boîtier selon la revendication 1, caractérisé en ce que le boîtier est muni d'une porte articulée (2) par des charnières (3) et d'un verrou (12), ladite porte portant un butoir (11) qui, lors de la fermeture de la porte, bloque la batterie en position horizontale.

3. Boîtier selon la revendication 1, caractérisé en ce que la face arrière (1c) du boîtier porte à l'intérieur du boîtier une lame élastique (10) horizontale servant au blocage de la batterie en position verticale.

4. Boîtier selon la revendication 1, caractérisé en ce que la face avant (31) du support de la batterie est percée de trou (33) pour le passage des fils d'amenée de courant (34) des bornes (21) de la batterie au connecteur femelle (35).

## Patentansprüche

1. Behälter für wartungsfreie Batterien mit immobilisierter Flüssigkeit für die Stromversorgung von selbständigen elektronischen Apparaten und Haltevorrichtung für die Batterie, mit Ausgängen für Stromversorgungsleitungen, mit Einrichtungen zum Arretieren der Batterie in vertikaler und horizontaler Richtung und mit einerseits an den Stromeingang der Batterie und andrerseits an die zu versorgenden elektronischen Apparate angeschlossenen elektrischen Verbindungselementen, wobei im Inneren des Behälters die die Batterie (20) einschließende Haltevorrichtung (30) gelagert ist, welche mit einem Griff (36) versehen ist und an deren Vorderseite (31) ein weibliches Verbindungsstück (35) für den Anschluß der Batterie befestigt ist, dadurch gekennzeichnet, daß an der oberen Wand (1d) des Behälters (1) an seiner Innenseite eine vertikal in den Behälter ragende Platte (6) als Träger für zwei Zentrierstifte (7a, 7b) und ein über einen Leiter (9) mit den zu versorgenden elektronischen Apparaten verbundenes männliches Verbindungsstück (8) befestigt ist, dessen über die Außenseite der Platte ragende Kontakte von dem weiblichen Verbindungsstück (35) der Batterie umfaßt werden, und daß die Frontwand (31) der Haltevorrichtung Führungsbohrungen (32a, 32b) an den der Lage der Führungsstifte (7a, 7b) der Platte (6) des Behälters entsprechenden Stellen aufweist und sie das mit dem entsprechenden männlichen Verbindungsstück (8) des Behälters zusammenwirkende und mit den Anschlußklemmen (21) der Batterie verbundene weibliche Verbindungsstück (35) trägt.

2. Behälter nach Anspruch 1, dadurch gekennzeichnet, daß der Behälter mit einer mittels Scharniere (3) schwenkbaren Tür (2) und einem Riegel (12) versehen ist, wobei die Tür einen die Batterie bei geschlossener Tür in horizontaler Richtung arretierenden Anschlag (12) aufweist.

3. Behälter nach Anspruch 1, dadurch gekennzeichnet, daß seine Rückseite (1c) im Inneren des Behälters eine horizontal liegende, die Batterie in vertikaler Richtung arretierende elastische Lamelle (10) aufweist.

4. Behälter nach Anspruch 1, dadurch gekennzeichnet, daß die Frontseite (31) der Haltevorrichtung der Batterie mit einer Bohrung (33) zum Durchführen der Stromzufuhrleitungen der Anschlußklemmen (21) der Batterie zum weiblichen Verbindungsstück (35) versehen ist.

**Claims**

1. An integrated case for an immobilized liquid maintenance free battery feeding independent electronic apparatus and the battery support, in which the case is provided with outgoing power supply conductors, means for vertically and horizontally blocking the battery and electric connection means connected on the one hand to the incoming current supply for the battery and, on the other, to the electronic apparatus to be supplied, the inside of the case forming a housing for the support (30) adapted to contain the battery (20), which support provided with a handle (36) has a front face (31) to which a female connector (35) is fixed for connection of the battery, characterized in that there is fixed to the upper wall (1d) of the case and inside the latter a vertical plate (6) serving as a support for centering pins (7a, 7b) and carrying a male connector (8) connected by a conductor (9) to the electronic apparatus to be supplied and whose studs coming out onto the outer side of the plate are intended to be engaged by a female connector (35) of the battery and in that the front face (31) of the battery support has a guide perforations (32a, 32b) at positions corresponding to the position of the guide pins (7a, 7b) of the plate (6) of the case and carries the female connector (35) cooperating with the corresponding male connector (8) of the case and connected to the terminals (21) of the battery (20).

2. The case as claimed in claim 1, characterized in that the case has a hinged door (2, 3) and a bolt (12), said door carrying a stop (11) which, during the closure of the door, blocks the battery in the horizontal position.

3. The case as claimed in claim 1, characterized in that the rear face (1c) of the case has, inside the case, a horizontal resilient blade (10) for blocking the battery in the vertical position.

4. The case as claimed in claim 1, characterized in that the front face (31) of the support of the battery is pierced with a hole (33) for passing wires (34) therethrough for feeding current from the terminals (21) of the battery to the female connector (35).

Fig.1

EP 0 226 488 B1

Fig: 2

*Fig.3*

EP 0 226 488 B1

## Fig. 4